**Europäisches Patentamt**

(19) **European Patent Office**

**Office européen des brevets**

(11) **EP 0 448 725 B1**

(12) **EUROPEAN PATENT SPECIFICATION**

(45) Date of publication and mention
of the grant of the patent:
**17.04.1996 Bulletin 1996/16**

(51) Int. Cl.$^6$: **B41J 2/485**

(86) International application number: **PCT/JP90/01337**

(21) Application number: **90915173.0**

(22) Date of filing: **17.10.1990**

(87) International publication number:
**WO 91/05664 (02.05.1991 Gazette 1991/10)**

(54) **CHARACTER DATA COMPRESSION METHOD AND CHARACTER MODIFICATION METHOD**

VERFAHREN ZUM VERDICHTEN VON CHARAKTERDATEN UND VERFAHREN ZUR ÄNDERUNG DER CHARAKTER

PROCEDE DE COMPRESSION DE DONNEES DE CARACTERES ET PROCEDE DE MODIFICATION DE CARACTERES

(84) Designated Contracting States:
**DE FR GB IT**

(30) Priority: **17.10.1989 JP 269322/89**
**01.11.1989 JP 285437/89**

(43) Date of publication of application:
**02.10.1991 Bulletin 1991/40**

(73) Proprietor: **NAKAJIMA ALL PRECISION CO., LTD.**
**Nagano-Ken (JP)**

(72) Inventor: **MURAISHI, Masayuki**
**Sarashina-gun Nagano 389-08 (JP)**

(74) Representative: **Palmer, Roger et al**
**PAGE, WHITE & FARRER**
**54 Doughty Street**
**London WC1N 2LS (GB)**

(56) References cited:
**JP-A- 1 184 154**        **JP-A- 1 275 159**
**JP-A- 6 227 789**        **JP-A-61 284 457**
**JP-A-62 278 052**        **JP-B- 5 631 024**

## Description

### TECHNICAL FIELD

The present invention relates to a character data compressing method suitable for use particularly in storing character font data for an electric typewriter, word processor, printer, matrix type display, and the like, in non-volatile memories serving as character generators.

The present invention also relates to a character modifying method suitable for expanding/condensing compressed character font data read from non-volatile memories.

### BACKGROUND ART

Conventionally, for a character generator used with a dot matrix printer, a dot matrix liquid crystal display, and the like, dots constituting each character are disposed within a matrix, e.g., having 24 dots per column. Data for each character is produced and stored in a non-volatile memory such as a ROM. The data includes information on whether or not there is a print data for each pin of the dot matrix which is the minimum unit in the horizontal direction, i.e., for each dot position in the vertical direction of the character, information on a character design, information on a data format, information on a character code, and the like. Such a character font is called a bit map font.

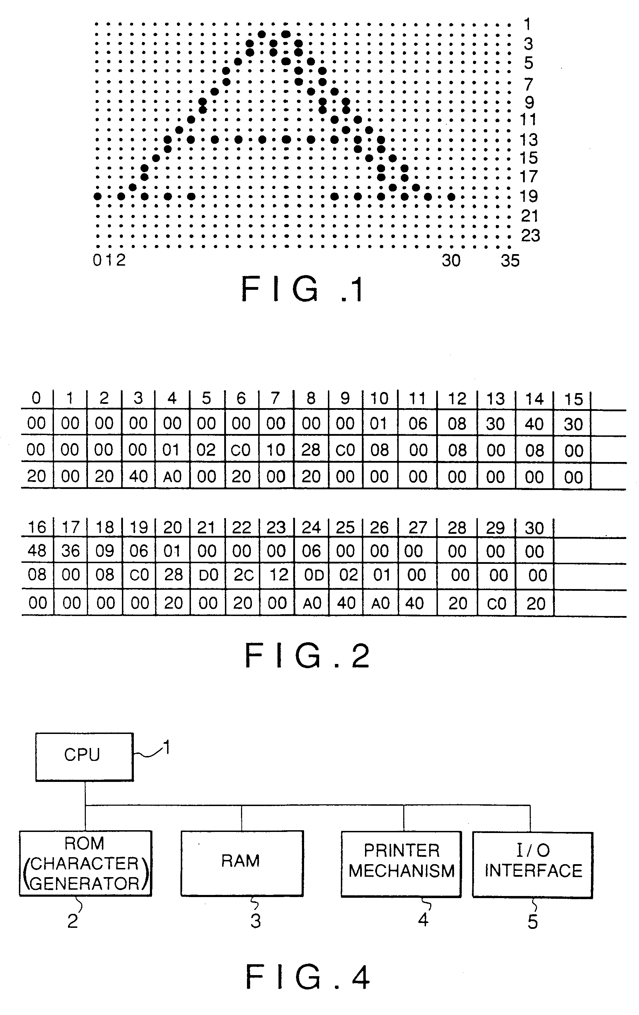

Fig. 1 illustrates a dot matrix for a conventional character generator wherein a bit map for a Prestige font "A" is formed. As shown in Fig. 1, dots are disposed in the bit map constructed of 24 rows and 31 columns. The 24 rows in one column are grouped in units of four rows, and the data representative of a presence/absence of dot in each unit of four rows is expressed by a hexadecimal number to provide a character data. In this manner, one column can be expressed by 3 byte data.

The hexadecimal data for the dot map shown in Fig. 1 is given in Fig. 2.

Data stored in a ROM includes $31 \times 3$ byte dot data for 31 columns from 0-th to 30-th columns as well as 3 byte data for a front space, character width, and back space shown in Fig. 3. The stored data is therefore 96 byte data in total.

Fig. 4 is a block diagram showing the concept of an apparatus having such a character generator, the apparatus being built in a printer. In this apparatus, a CPU 1 is connected to a ROM 2 serving as a character generator fixedly storing character information, a RAM 3, a printer mechanism 4, and an I/O interface 5. With such an arrangement, CPU 1 controls the printer mechanism 4 to print dot information read from the character generator ROM 2. A similar arrangement is also applicable to a matrix type display or the like.

Such a conventional data structure requires that a bit map should have all dot data of a matrix including a dot data which is not printed. Although each character has many dots which are not actually printed, the data for such dots must be prepared in the bit map, requiring in a large capacity memory.

Furthermore, a character data read from such a character generator is often modified by expansion, condensation, or emphasis. However, the above-described conventional dot storage scheme prepares character data by separately grouping each character in the vertical direction to obtain its character data. As a result, complicated operation is required to modify a character. For example, in the case of expansion, an OR operation is executed by additionally providing null data for one column. In the case of condensation, an OR operation is executed between data for two columns to delete unnecessary dots.

Such operations are carried out in units of bytes (8 bits) or words (16 bits). Therefore, an expansion by $\underline{n}$ or a condensation by $1/n$ becomes more complicated than the case of $\underline{n} = 2$, resulting in a lower printing speed.

Another prior art document, JP-A-61284457 discloses a data compression method in which two-bit data codes represent respectively:-

a column with no black dots, a column identical to the previous column, a first start and finish position for black dots and a second start and finish position for black dots. Because the columns are each 16 rows long, the latter two codes also define a number of print dots to be continuously printed.

It is an object of the present invention to at least partially overcome the above problems. An embodiment of the invention provides a method of compressing character data in a character generator, which is capable of reducing the memory requirements and facilitating character modification operations.

### DISCLOSURE OF INVENTION

According to the present invention, there is provided a character data compressing method comprising the step of cutting out a bit map made of dots arranged in m rows and n columns, said dots constituting a character, at a predetermined pitch in a row or column direction; the method further comprising the steps of providing a dot presence data for each row or column cut out if there exists a print dot in the row or column; and providing, for each row or column where said print dot exists, print information including a print start position of said print dot, continuity data indicating that there is only one set of continuous print dots in the row/column or that another set of continuous dots exists in the row/column and a number of print dots to be continuously printed.

A character, particularly an alphanumeric character, has often many line elements in the horizontal or vertical direction. In view of this, according to the present invention, a character is separately grouped at a predetermined pitch in the horizontal direction (row direction) or vertical direction (column direction), and a dot start position and continuous dot length are used as a data for each section having a print dot. Therefore, it is possible to compress a character data considerably and store character fonts in a memory having a small capacity. Furthermore, the expansion/condensation in the horizontal or vertical direction can be carried out readily only by changing the dot start address and continuous dot length, thereby facilitating a character modifying operation.

Furthermore, in a character modifying method using a character data stored in the manner following the character compressing method, the dot start position data and continuous dot length data are derived as fundamental parameters, and the data is subjected to a character modifying operation corresponding to one of various modifying modes. In accordance with the operation results, the dot start address is changed and print dot information corresponding in amount to the continuous dot length is given. Therefore, processes for various types of character modifying modes can be executed easily. Furthermore, a simple operation is available for character modification without adding dots, resulting in high speed operation.

BRIEF DESCRIPTION OF DRAWINGS

Fig. 1 is a diagram illustrating an example of a character font of a bit map style, Fig. 2 is a table showing conventional character data, Fig. 3 is a diagram illustrating spaces before and after each character using conventional character data, Fig. 4 is a block diagram showing an example of the structure of an apparatus having a character generator storing compressed character data, Fig. 5 is a diagram illustrating the fundamental concept of a character data compressing method according to the present invention, Fig. 6 is a diagram illustrating a presence/absence of a dot in each row obtained by cutting out a character in the horizontal direction, Fig. 8 is a table showing an example of data of a character representing a dot start position and a continuous dot state, and Fig. 9 is a flow chart illustrating the contents of the character modifying method according to the present invention.

BEST MODE FOR CARRYING OUT THE INVENTION

An embodiment of the present invention will be described with reference to the accompanying drawings.

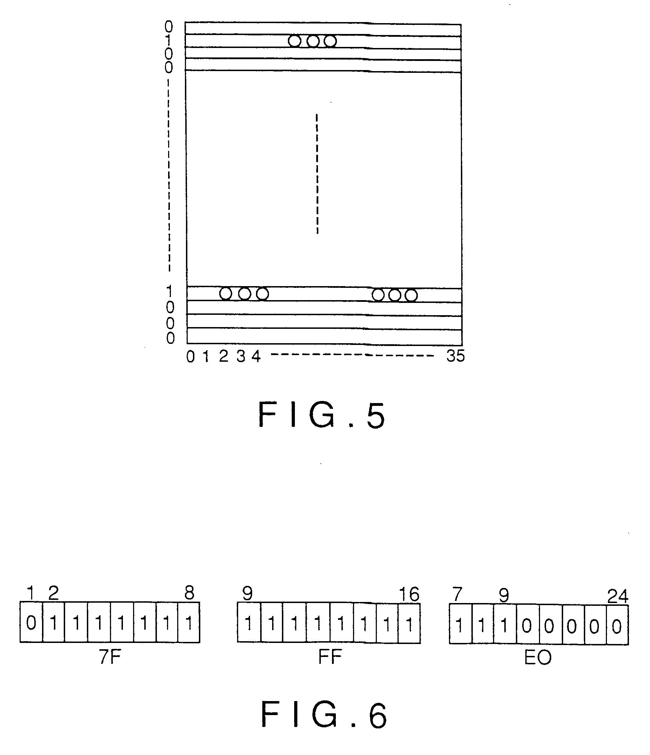

Figs. 5 to 8 illustrate how data is compressed according to the present invention.
Fig. 5 is a diagram illustrating character data cut out in the horizontal direction (row direction) in accordance with the present invention.
A Prestige font "A" is used by way of example similarly to the description of the prior art. This character is developed in a 24 × 31 dot matrix map. In addition to the 31 bits, 4 bits from 32-th to 35-th bits are provided for a script font and proportional printing which requires a wider space than 31 bit width. This map is grouped into 1st to 24-th sections for each column. The character data is given in the following manner.

(A) Section Information

Section information is a data representative of the presence/absence of a dot data in each of 24 sections. For example, this information is a one bit data which takes "1" when a data is present in the corresponding section, and "0" when not present. Therefore, one row can be represented by 24 bits/8 = 3 bytes, for example, by three groups of hexadecimal numbers 7F, FF, and EO as shown in Fig. 2.

(B) Option Information

Option information is another data necessary for printing, and has one byte reserved. For example, this information designates the center position of a character design, the type of data format, or the like.

(C) Character Data

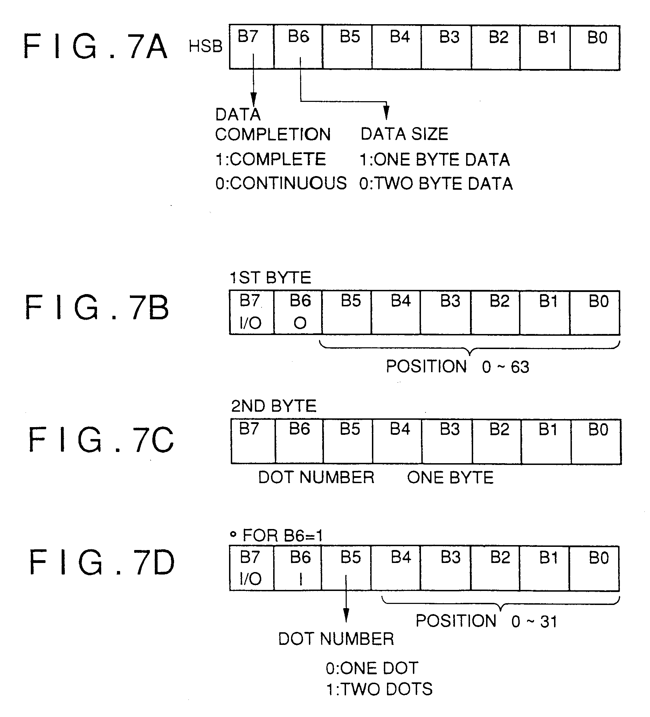

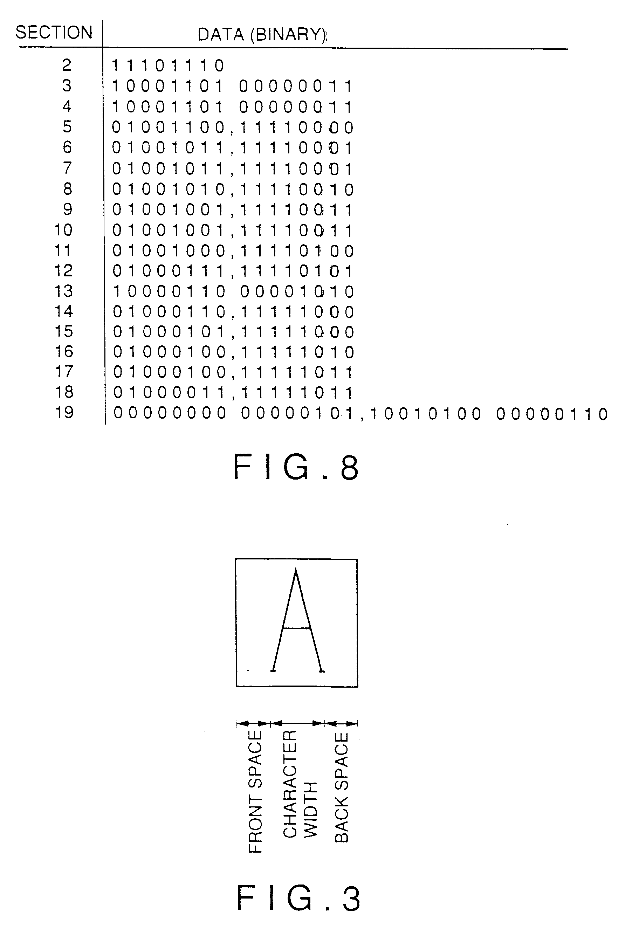

The character data represents the positions of dots constituting a character and the continuous dot length.
The character data will be described taking the dot matrix shown in Fig. 1 as an example. The character data is constructed of an 8 bit data as shown in Fig. 7A. B7 of MSB indicates the state of dots. Namely, "1" represents a complete state of dots, and "0" represents a continue state of dots. The "complete state" means that a set of dots is present at only one area. The "continue state" means that another set of dots is present at another area. From the viewpoint of printing requisites, a set of dots means dots consecutively disposed every other one position. In the example shown in Fig. 1, sections 2, 3, 4, and 13 have one set of dots, and B7 of these sections takes "1" as shown in Fig. 8.

B6 represents a data size. "1" represents one byte data for the case where the number of dots is two or smaller. "0" represents a two byte data for the case where the number of dots is three or larger.

An example of B6 = 1 is shown in Fig. 7D. In this case, the number of dots can be expressed by one bit of B5, and the position from 0-th column to 31-th column is expressed by bits B4 to B0. Therefore, both the number of dots and the position of a start dot can be expressed by one byte.

In contrast, in the case of B6 = 0, the position is expressed by bits B5 to B0 in the first byte as shown in Fig. 7B, and the number of dots is expressed by one byte bits B7 to B0 of the second byte as shown in Fig. 7C.

The particular example shown in the dot matrix of Fig. 1 will be described in more detail with respect to the method of obtaining a bit map of a character in the above-described manner.

Section 2: Two dots are disposed starting from the 14-th column. Therefore, B7 = 1, B6 = 1, B5 = 1, and the position 14 is represented by 01110 (binary notation), providing the character data of 11101110.

Section 3: Three dots are disposed starting from the 13-th column. Therefore, B7 = 1, and B6 = 0 indicating that the data size is two bytes. In the first byte, only the position 13 = 01101 (binary notation) is given, and in the second byte, only the number of bits, 3, is given. The results are the first byte 10001101 and second byte 00000011.

Section 5: One dot is disposed on the 12-th column and two dots are disposed starting from the 16-th column. Therefore, the two byte data is obtained as 01001100 and 11110000.

Section 13: Ten dots are disposed starting from the 6-th column, indicating the two byte data size. Therefore, B7 = 1 and B6 = 0, resulting in the first byte 10000110 and second byte 00001010.

Section 19: Five dots area disposed starting from the 0-th column, and six dots are disposed starting from the 20-th column, resulting in two sets of two byte data.

The resultant data is shown in Fig. 8.

As seen from Fig. 8, the character data of this example requires 37 bytes.

As a result, the character "A" shown in Fig. 1 can be represented only by a maximum of 41 bytes including the section information (A), option information (B), and character data (C). Fifty five bytes are deleted as compared with the conventionally required number of bytes, reducing to less than a half of the conventional byte number.

In the above embodiment, a bit map is cut out in the horizontal direction. It is also possible to cut out and develop a bit map in the vertical direction, allowing the same data compression.

Furthermore, in the above embodiment, the bit start position is indicated by a positive number. The bit start position may be indicated by a positive or negative number relative to the character center position 0.

The character modifying process for a character data stored by using the above method can be simplified.

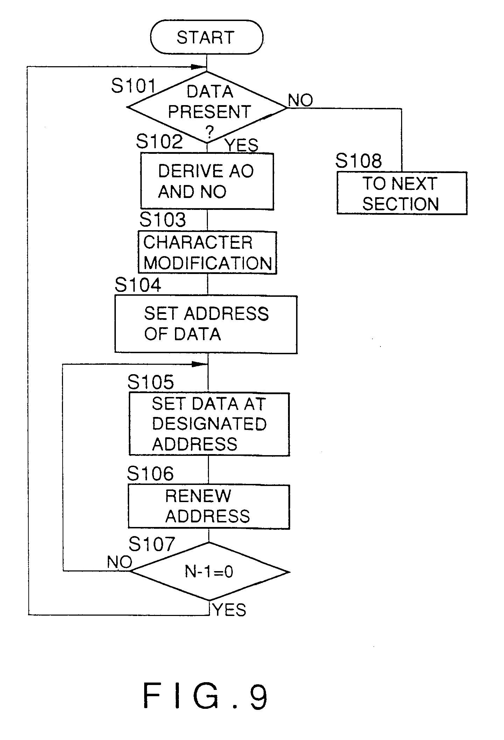

Fig. 9 is a flow chart showing the details of the character modifying method according to the present invention.

It is assumed, for example, that the character generator stores therein the dot presence information (Fig. 6) at each section of the character "A" of Fig. 1 separately grouped in the horizontal direction, and the dot start position data and continuous dot length data (Fig. 8).

First, it is checked for a certain character if there is any dot data in the first section (first row) (step S101).

If there is a dot data, a dot start position data A0 and dot continuous length data N0 are read from the character generator (step S102).

In accordance with the read-out data, an operation for character modification is executed (step S103). Such an operation includes the following ones.

(1) Expansion by $\underline{n}$

$$AnEX = nA0$$

$$NnEX = nN0$$

(2) Condensation by 1/n

$$AnCON = INT(A0/n)$$

$$NnCON = INT(N0/n + 1)$$

where INT corresponds to an integral part.

(3) Emphasis (emphasis factor m)

$$AEm = a0$$

$$NEM = N0 + m$$

where m is equal to or larger than 1.

(4) Expansion by n and Emphasis (emphasis factor m)

$$AnEXEM = nA0$$

$$NnEXEM = nN0 + m$$

where m is equal to or larger than 1.

(5) Condensation by 1/n and Emphasis (emphasis factor m)

$$AnCONEM = INT(A0/n)$$

$$NnCONEM = INT(N0/n + 1 + m)$$

(6) Expansion by x and Condensation by 1/y

$$Ax/y = xA0/y$$

$$Nx/y = \begin{cases} N0 \text{ for } x/y = 1 \\ INT(xN0/y + 1) \text{ for } x/y < 1 \\ INT(xN0/y) \text{ for } x/y > 1 \end{cases}$$

(7) Expansion by x, Condensation by 1/y, and Emphasis (emphasis factor m)

$$Ax/y = xA0/y$$

$$Nx/y = \begin{cases} N0 \text{ for } x/y = 1 \\ INT(xN0/y + 1 + m) \text{ for } x/y < 1 \\ INT(xN0/y + m) \text{ for } x/y > 1 \end{cases}$$

Next, the address at which the obtained data is stored is set (step S104). Specifically, a reference address for a character is added to the value A obtained through the character modifying operation, and the added result is used as the new address at the time of character modifying. If a slanted character is intended, the displacement degree of the address for each row is changed with the slant degree.

The dot print data is set at the address obtained in the above manner (step S105).

The address is renewed to the address for the next dot (step S106). It is checked if the number of dots subjected to the calculation of step S103 is 0 or not, i.e., if the operation for the last dot has been completed or not (step S107). If not, the control returns to step S105 to repeat the above steps until the number of dots subjected to the calculation becomes 0.

After the operation for the last dot among a set of dots has been completed, the control returns to step S101 to check if there is any dot in the row or in another column. The steps S101 to S107 are repeated until the dot data becomes not present.

If at step S101 there is no dot data to be processed, the control advances to the next section (step S108). Similar operations are executed for the next section to complete the modifying operation of the entire character.

In the apparatus shown in Fig. 4, the dot start position data A0 and continuous dot length data N0 are read from ROM 2, and the character modifying procedure is performed by CPU 1 in accordance with the flow chart shown in Fig. 9. In accordance with the obtained dot information, the printer mechanism 4 is controlled to print out the information.

As described above, according to the character modifying method of the present invention, various modifying processes are executed using the common parameters A and N in place of the conventional operation which has been executed in units of byte. In addition, an address without dot data is not searched. Accordingly, the processes can be speeded up. Furthermore, various processing are possible only by changing the contents of operations for the common parameters, and it is possible to readily and freely change the magnification factor, reduction factor, emphasis factor, and slant degree.

In the above embodiment, the character modifying procedure is performed for sections in the row direction. The procedure for sections in the column direction with a character generator storing character fonts can be executed quite the same manner.

A known smoothing (kerning) process may be carried out to smoothen the contour of a character after the character modifying process.

**Claims**

1. A character data compressing method comprising the step of cutting out a bit map made of dots arranged in m rows and n columns, said dots constituting a character, at a predetermined pitch in a row or column direction;
   the method further comprising the steps of:
   providing a dot presence data for each row or column cut out if there exists a print dot in the row or column; and
   providing, for each row or column where said print dot exists, print information including a print start position of said print dot, continuity data indicating that there is only one set of continuous print dots in the row/column or that another set of continuous dots exists in the row/column and a number of print dots to be continuously printed.

2. A character data compressing method according to claim 1, wherein said dots to be continuously printed are spaced apart by a single dot interval.

3. A character data compressing method according to claim 1 or 2, wherein said continuity data comprises the most significant bit of said print information, and said print information further comprises:-
   a bit next to the most significant bit indicating that the data size of said print information is one byte or two bytes; and
   if said data size is one byte, third and following bits representing number of dots and dot position if said data size is one byte, or if said data size is two bytes, a third and following bits of a first byte representing dot position and the second byte data representing number of dots.

4. A method of providing modified character data comprising:-
   compressing character data in accordance with any of claims 1-3 to provide compressed character data;
   storing said compressed character data in a memory;
   reading from said memory said print start position data and said number of print dots to be continuously printed, for each row or column in which there exists a print dot of said character;
   performing an operation corresponding to the character modification, with respect to said print start position data and said number of print dots to be continuously printed; and
   setting dot print information corresponding to an address defined by a continuous dot length obtained by said character modification operation, at a new address obtained by said character modification operation for said print start position data.

**Patentansprüche**

1. Verfahren zum Verdichten von Charakterdaten, aufweisend die Schritte des Ausschneidens einer Bitmap, die aus Punkten erstellt ist, die in m Reihen und in n Spalten angeordnet sind, wobei die Punkte ein Zeichen (Charakter) bilden, mit einer vorbestimten Teilung in Reihen- oder Spaltenrichtung;
   wobei das Verfahren ferner die Schritte umfaßt:
   Vorsehen von Punktpräsenzdaten für jede ausgeschnittene Reihe oder Spalte, falls ein Druckpunkt in der Reihe oder Spalte existiert; und
   Vorsehen von Druckinformation für jede Reihe oder Spalte, in der dieser Druckpunkt existiert, wobei die Druckinformation eine Druckstartposition des Druckpunktes, Fortsetzungsdaten, die anzeigen, daß nur ein Satz kontinuierlicher Druckpunkte in der Reihe/Spalte vorliegt, oder daß ein weiterer Satz kontinuierlicher Punkte in der Reihe/Spalte existiert, und eine Anzahl von Druckpunkten, die kontinuierlich zu drucken sind, umfaßt.

2. Verfahren zum Verdichten von Charakterdaten nach Anspruch 1, in welchem die Punkte, die kontinuierlich zu drucken sind, durch ein Einzelpunktintervall voneinander beabstandet sind.

3. Verfahren zum Verdichten von Charakterdaten nach Anspruch 1 oder 2, in welchem die Fortsetzungsdaten das höchstwertige Bit (MSB) der Druckinformation umfassen und die Druckinformation ferner aufweist:
   ein dem höchstwertigen Bit nächstgelegenes Bit, anzeigend, daß der Datenumfang der Druckinformation ein Byte oder zwei Bytes beträgt; und

falls der Datenumfangein Byte beträgt, dritte und folgende Bits, die die Punktzahl und Punktposition repräsentieren, falls die Datengröße ein Byte beträgt, oder falls die Datengröße zwei Bytes betragt, ein drittes und folgende Bits eines ersten Bytes, welches die Punktposition repräsentiert, und die Daten des zweiten Bytes, die die Punktzahl repräsentieren.

4. Verfahren zum Liefern von modifizierten Charakterdaten, umfassend:

Verdichten von Charakterdaten nach einem der Ansprüche 1 bis 3 zum Vorsehen verdichteter Charakterdaten;

Speichern der verdichteten Charakterdaten in einem Speicher;

Auslesen aus diesem Speicher der Druckstartpositionsdaten und der Anzahl von Druckpunkten, die kontinuierlich zu drucken sind, für jede Reihe oder Spalte, in der ein Druckpunkt des Zeichens (Charakters) existiert;

Ausführen einer Operation entsprechend der Charaktermodifikation bezüglich der Druckstartpositionsdaten und der Anzahl von Druckpunkten, die kontinuierlich zu drucken sind; und

Festlegen von Punktdruckinformation entsprechend einer Adresse, die durch eine kontinuierliche Punktlänge definiert ist, welche durch die Charaktermodifizierungsoperation gewonnen wurde, auf eine neue Adresse, die durch die Charaktermodifizierurigsoperation für die Druckstartpositionsdaten gewonnen wurde.

## Revendications

1. Procédé de compression de données de caractères comprenant l'étape de découpage d'une image en mode point faite de points disposés en m rangées et n colonnes, lesdits points constituant un caractère, à un pas prédéterminé dans une direction de rangée ou de colonne ;

le procédé comprenant de plus les étapes :

de fourniture de données de présence de points pour chaque rangée ou chaque colonne découpée s'il existe un point d'impression dans la rangée ou la colonne ; et

de fourniture, pour chaque rangée ou chaque colonne où ledit point d'impression existe, d'informations d'impression comprenant une position de début d'impression dudit point d'impression, des données de continuité indiquant qu'il y a seulement un ensemble de points continus d'impression dans la rangée/colonne ou qu'un autre ensemble de points continus existe dans la rangée/colonne et un certain nombre de points d'impression à imprimer en continu.

2. Procédé de compression de données de caractères selon la revendication 1, dans lequel lesdits points à imprimer en continu sont séparés par un intervalle de points unique.

3. Procédé de compression de données de caractères selon la revendication 1 ou 2, dans lequel lesdites données de continuité comprennent le bit le plus significatif desdites informations d'impression, et lesdites informations d'impression comprennent de plus :

un bit contigu au bit le plus significatif indiquant que la taille des données desdites informations d'impression est d'un octet ou de deux octets ; et

si ladite taille des données est d'un octet, le troisième bit et les bits suivants représentant le nombre de points et la position des points si ladite taille des données est d'un octet, ou si ladite taille des données est de deux octets, un troisième bit et les bits suivants d'un premier octet représentant la position des points et les données du second octet représentant le nombre de points.

4. Procédé pour fournir des données de caractères modifiées comprenant :

la compression des données de caractères selon l'une quelconque des revendications 1 à 3 pour fournir des données de caractères compressées ;

le stockage desdites données de caractères compressées dans une mémoire ;

la lecture, à partir de ladite mémoire, desdites données de position de début d'impression et ledit nombre de points d'impression à imprimer en continu, pour chaque rangée ou chaque colonne dans laquelle il existe un point d'impression dudit caractère ;

l'exécution d'une opération correspondant à la modification des caractères, par rapport auxdites données de position de début d'impression et audit nombre de points d'impression à imprimer en continu; et

le réglage des informations d'impression de points correspondant à une adresse définie par une longueur de points continus obtenue par ladite opération de modification de caractères, à une nouvelle adresse obtenue par ladite opération de modification de caractères pour lesdites données de position de début d'impression.

F I G .1

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 00 | 00 | 00 | 00 | 00 | 00 | 00 | 00 | 00 | 00 | 01 | 06 | 08 | 30 | 40 | 30 |
| 00 | 00 | 00 | 00 | 01 | 02 | C0 | 10 | 28 | C0 | 08 | 00 | 08 | 00 | 08 | 00 |
| 20 | 00 | 20 | 40 | A0 | 00 | 20 | 00 | 20 | 00 | 00 | 00 | 00 | 00 | 00 | 00 |

| 16 | 17 | 18 | 19 | 20 | 21 | 22 | 23 | 24 | 25 | 26 | 27 | 28 | 29 | 30 |
|----|----|----|----|----|----|----|----|----|----|----|----|----|----|----|
| 48 | 36 | 09 | 06 | 01 | 00 | 00 | 00 | 06 | 00 | 00 | 00 | 00 | 00 | 00 |
| 08 | 00 | 08 | C0 | 28 | D0 | 2C | 12 | 0D | 02 | 01 | 00 | 00 | 00 | 00 |
| 00 | 00 | 00 | 00 | 20 | 00 | 20 | 00 | A0 | 40 | A0 | 40 | 20 | C0 | 20 |

F I G . 2

F I G . 4

FIG.5

FIG.6

F I G . 7A  HSB | B7 | B6 | B5 | B4 | B3 | B2 | B1 | B0 |

DATA
COMPLETION      DATA SIZE
1:COMPLETE      1:ONE BYTE DATA
0:CONTINUOUS  0:TWO BYTE DATA

1ST BYTE

F I G . 7B

| B7 I/O | B6 O | B5 | B4 | B3 | B2 | B1 | B0 |

POSITION  0 ~ 63

2ND BYTE

F I G . 7C

| B7 | B6 | B5 | B4 | B3 | B2 | B1 | B0 |

DOT NUMBER      ONE BYTE

∘ FOR B6=1

F I G . 7D

| B7 I/O | B6 I | B5 | B4 | B3 | B2 | B1 | B0 |

POSITION  0 ~ 31

DOT NUMBER

0:ONE DOT
1:TWO DOTS

| SECTION | DATA (BINARY) |
|---|---|
| 2 | 11101110 |
| 3 | 10001101 00000011 |
| 4 | 10001101 00000011 |
| 5 | 01001100,11110000 |
| 6 | 01001011,11110001 |
| 7 | 01001011,11110001 |
| 8 | 01001010,11110010 |
| 9 | 01001001,11110011 |
| 10 | 01001001,11110011 |
| 11 | 01001000,11110100 |
| 12 | 01000111,11110101 |
| 13 | 10000110 00001010 |
| 14 | 01000110,11111000 |
| 15 | 01000101,11111000 |
| 16 | 01000100,11111010 |
| 17 | 01000100,11111011 |
| 18 | 01000011,11111011 |
| 19 | 00000000 00000101,10010100 00000110 |

# FIG.8

# FIG.3

START

S101 — DATA PRESENT ? — NO

S102 — YES

DERIVE AO AND NO

S108 — TO NEXT SECTION

S103 — CHARACTER MODIFICATION

S104 — SET ADDRESS OF DATA

S105 — SET DATA AT DESIGNATED ADDRESS

S106 — RENEW ADDRESS

S107 — N-1=0 — NO / YES

F I G . 9